# EUROPÄISCHE PATENTSCHRIFT

(11) **EP 2 229 287 B1**
(45) Veröffentlichungstag und Bekanntmachung des Hinweises auf die Patenterteilung: **04.03.2015**
(21) Anmeldenummer: 08869191.0
(22) Anmeldetag: 17.12.2008
(51) Int. Cl.: B42D 15/00, B44F 1/10, G02B 5/18, G03H 1/00, G03H 1/22

(54) **SICHERHEITSMERKMALE MIT GITTER FÜR HOHE KIPPWINKEL**
SECURITY FEATURE FOR HIGH TILT ANGLES, COMPRISING A GRATING
SIGNE DE SÉCURITÉ POUR ANGLES D'INCLINAISON ÉLEVÉS

(30) Priorität: 27.12.2007 DE 102007063275
(43) Veröffentlichungstag der Anmeldung: 22.09.2010
(73) Patentinhaber: Giesecke & Devrient GmbH, 81677 München (DE)
(72) Erfinder: RAHM, Michael, 83646 Bad Tölz (DE); GERHARDT, Thomas, 81549 München (DE)
(86) Internationale Anmeldenummer: PCT/EP2008/010746
(87) Internationale Veröffentlichungsnummer: WO 2009/083150

(56) Entgegenhaltungen:
- WO-A-91/11331
- WO-A-03/000503
- WO-A-03/084765
- WO-A-03/084766
- WO-A-2007/107235
- DE-A-102004 006 771
- DE-A-102005 061 749

## Beschreibung

Die Erfindung betrifft ein Sicherheitselement für Wertdokumente, wie Banknoten oder Ausweiskarten, mit einem ersten Sicherheitsmerkmal, das bevorzugt eine diffraktive Struktur, insbesondere ein Hologramm, ist.

Das Dokument WO 2003/084765 A2 offenbart ein Sicherheitselement für Wertdokumente mit allen Merkmalen in Oberbegriff des Anspruchs 1.

Hologramme werden als Sicherheitsmerkmal zum Schutz von Banknoten und Wertpapieren vor Fälschung eingesetzt. Um dieser Aufgabe möglichst umfassend gerecht zu werden, wurde eine Vielzahl von Hologramm-Effekten entwickelt, z.B. Pump-, Bewegungs-, Flip-Effekte, Echtfarben-Hologramme und Mattstrukturen.

Um auch Produkte mit gekrümmten Oberflächen mit Hologrammen optisch ansprechend schützen zu können, wurden in DE 103 48 619 A1 Möglichkeiten vorgeschlagen, wie die durch die Krümmung verursachte perspektivische Verzerrung des holographischen Bildes korrigiert bzw. kompensiert werden kann.

Nachteilig an den Sicherheitsmerkmalen des Standes der Technik ist jedoch, dass Hologramme, die weiter als etwa 45° gekippt werden, zumeist farblos oder matt erscheinen. Des Weiteren werden auch unbeabsichtigte, "parasitäre" Effekte beobachtet, da beispielsweise ein Echtfarben-Hologramm bei großen Kippwinkeln in "Falschfarben" bzw. seinen Komplementärfarben erscheint. Der Farbvielfalt um die Oberflächennormale steht also eine Farbarmut bei hohen Kippwinkeln gegenüber.

Weiterer Nachteil ist, dass die Gitterperiode von üblicherweise verwendeten Hologrammen mindestens 600 nm beträgt. Solche Gitter können mittels interferometrischer Direktbelichtung hergestellt werden. Dadurch sinkt die Fälschungssicherheit der Hologramme, da die Herstellung von Originalen mittels Direktbelichtung relativ einfach und kostengünstig ist.

Der Erfindung liegt die Aufgabe zugrunde, ein Sicherheitselement vorzuschlagen, das die Probleme des Standes der Technik löst.

Diese Aufgabe wird durch die Merkmale des unabhängigen Anspruchs 1 gelöst. Weiterbildungen der Erfindung sind Gegenstand der abhängigen Ansprüche.

Erfindungsgemäß weist das Sicherheitselement in mindestens einem Bereich ein erstes Sicherheitsmerkmal auf. In mindestens einem Bereich des ersten Sicherheitsmerkmals ist ein zweites Sicherheitsmerkmal angeordnet, das mindestens aus einem Subwellenlängengitter, einem geblazten Gitter oder einem Sägezahngitter besteht. Das zweite Sicherheitsmerkmal besteht hierbei aus mindestens einem perspektivisch verzerrten Bild, das bei Betrachtung unter einem Betrachtungswinkel verzerrungsfrei in den korrekten Proportionen erscheint, bei dem ein Betrachter das Subwellenlängengitter, geblazte Gitter oder Sägezahngitter leuchtend bzw. hell wahrnimmt. Bei einem anderen Betrachtungswinkel tritt das zweite Sicherheitsmerkmal nicht oder gegenüber dem ersten Sicherheitsmerkmal kaum in Erscheinung.

Besonderer Vorteil der Erfindung ist, dass Subwellenlängengitter nicht mittels interferometrischer Direktbelichtung hergestellt werden können. Dadurch wird die Fälschungssicherheit erhöht, da die Herstellung von Originalen mittels fokussierten Laserstrahl- oder Elektronenstrahlanlagen kostenintensiver und technisch aufwendiger ist als eine interferometrische Direktbelichtung.

Erfindungsgemäß werden somit die bei schräger Aufsicht auftretenden Verzerrungen der Bildinformation, die mit dem Sicherheitsmerkmal kommuniziert werden soll, bereits im Vorfeld kompensiert. Das im Sicherheitselement gespeicherte Bild wird perspektivisch verzerrt angelegt, so dass das Bild bei Betrachtung unter dem vorbestimmten Winkel verzerrungsfrei in den korrekten Proportionen erscheint.

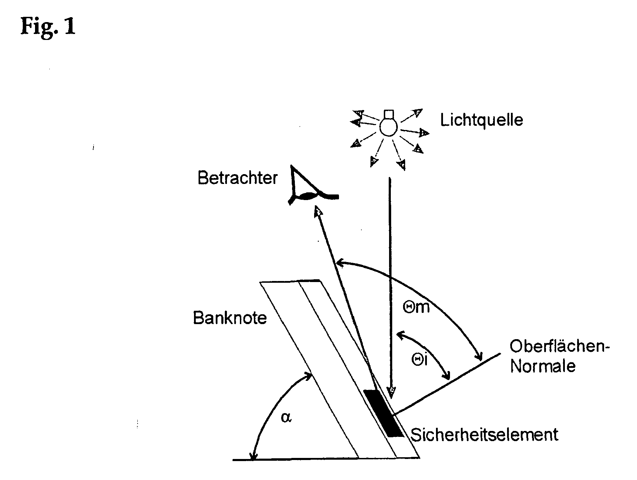

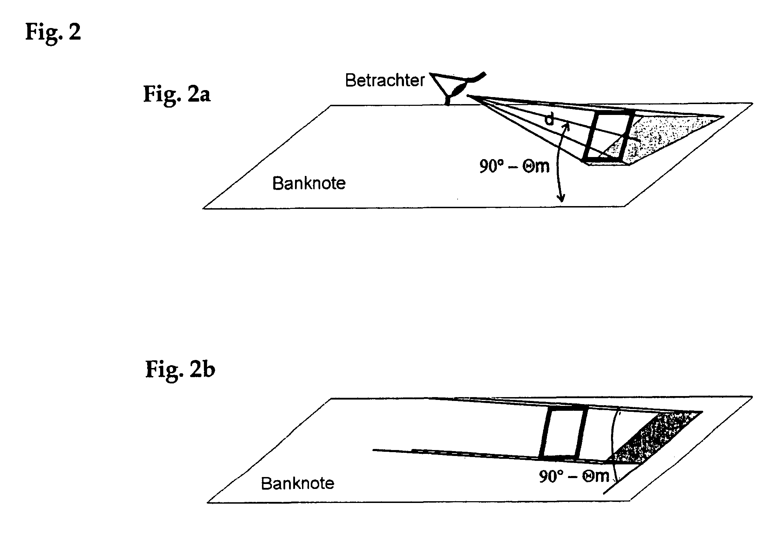

Ein Kippen des Sicherheitselementes bedeutet im Sinne der Erfindung, dass das Sicherheitselement vom Betrachter so gehalten wird, dass sich eine Betrachtungs- und Beleuchtungssituation entsprechend Fig. 1 und 2 ergibt. Die optisch wirksamen Strukturen der Bildinformation sind so konzipiert, dass sie bei senkrechter Betrachtung bzw. bei Betrachtung unter einem steilen Betrachtungswinkel - wie er beispielsweise für Standardhologramme üblich ist - nicht oder kaum in Erscheinung treten. Erst wenn der mit dem entsprechenden Sicherheitsmerkmal ausgestattete Wertgegenstand, zum Beispiel eine Banknote, um einen großen Winkel verkippt wird, offenbart das Sicherheitsmerkmal seine Existenz. Die Gestaltung und Anordnung des Sicherheitsmerkmals gewährleistet, dass die dann ohne Hilfsmittel sichtbar werdende Information trotz des großen Kippwinkels unverzerrt wahrgenommen werden kann.

Erfindungsgemäß beträgt der Betrachtungswinkel Θm, bei dem das Subwellenlängengitter, das geblazte Gitter oder das Sägezahngitter seine optische Wirkung entfaltet, ebenso wie der Einfallswinkel Θi mindestens 45°. Bei niedrigeren Betrachtungswinkeln hingegen, d.h. Θm < 45°, tritt das Sicherheitsmerkmal gar nicht oder nur wenig in Erscheinung.

Die optisch wirksamen Strukturen, aus denen die Bildinformation aufgebaut wird, müssen an die vorbestimmte Betrachtungssituation angepasst werden. Sie sollen einen deutlichen Effekt bei hohen Betrachtungswinkeln hervorrufen, während für Θm < 45° keine oder nur geringe Wirkung sichtbar sein soll. Für diese Aufgabe sind besonders gut geeignet Subwellenlängengitter mit einer Periode von ca. 300 nm, geblazte Gitter mit einer Periode, die bevorzugt vom Subwellenlängenbereich bis zu einigen Mikrometern reicht, und Sägezahngitter mit Perioden von über 3 µm, bevorzugt 5 µm, besonders bevorzugt zwischen 5 und 15 µm. Des Weiteren sind auch Kombinationen dieser Gitterstrukturen möglich.

Im Sinne der vorliegenden Erfindung bestehen Subwellenlängengitter aus Gitterstrukturen mit einer Gitterperiode bzw. einer lateralen Ausdehnung der Gitterelemente, die geringer ist als die Wellenlänge des auftreffenden Lichtes. Geblazte Gitter sind Gitter mit einem Sägezahnprofil und einem bestimmten Anstiegswinkel, bei denen die Lichtintensität des gebeugten Lichts auf eine bestimmte Beugungsordnung konzentriert wird. Sägezahngitter unterscheiden sich von geblazten Gittern darin, dass sie eine größere Gitterperiode bzw. laterale Ausdehnung der Gitterelemente aufweisen. Die Strukturen wirken daher achromatisch, da Beugung im Vergleich zur spiegelnden Reflexion eine untergeordnete Rolle spielt.

Erfindungsgemäß wird somit ein Sicherheitsmerkmal bereitgestellt, das bei Betrachtung unter hohen Kippwinkeln besonders brillant erscheint, während es bei geringer Verkippung nicht zu erkennen ist. Besonders vorteilhaft lässt sich das zweite Sicherheitsmerkmal in den Standardhologrammstrukturen oder einem mit mikrooptischen Komponenten ausgestatteten Bereich eines Sicherheitselements verbergen.

Bei dem erfindungsgemäßen Sicherheitselement kann es sich um einen Sicherheitsfaden, insbesondere einen Fensterfaden, Sicherheitsetiketten oder bevorzugt eine Sicherheitsfolie, d.h. Folienstreifen, der auf der Oberfläche des Substrates aufgebracht ist, handeln.

Das erfindungsgemäße Sicherheitselement kann neben den ersten und zweiten Sicherheitsmerkmalen weitere (dritte) Sicherheitsmerkmale aufweisen. Infrage kommen beispielsweise magnetische, phosphoreszierende, fluoreszierende oder sonstige lumineszierende Stoffe, gezielt eingestellte Leitfähigkeit, Farbkippeffekte oder gefärbter Prägelack.

Die Herstellung der Originale für Subwellenlängengitter oder für geblazte Gitter erfolgt bevorzugt durch Belichtung einer elektronenempfindlichen Schicht, insbesondere einer Polymer- oder Lackschicht, mit einem Elektronenstrahl, gefolgt von einem Entwicklungsprozess. Mikrostrukturen, wie Sägezahnstrukturen, können zwar ebenfalls mittels einer Elektronenstrahlanlage erzeugt werden, eine Laserbelichtungsanlage ist jedoch für diesen Zweck besser geeignet. Bei Laserbelichtungsanlagen erfolgt die Belichtung mit einem fokussierten Laserstrahl in eine Photolackschicht, welche anschließend entwickelt wird. In manchen Fällen empfiehlt sich auch der nachträgliche Einsatz einer Ionenätzanlage, beispielsweise um das im Resist entstandene Oberflächenprofil zu modifizieren oder in das Substrat zu übertragen.

Aus dem Original kann durch Vervielfältigung der Originalstruktur und galvanisches Abformen ein Prägewerkzeug hergestellt werden, mit dem die gewünschte Oberflächenstruktur in eine UV-härtbare Schicht, vorzugsweise eine Lackschicht, übertragen wird. Dabei wird die UV-härtbare Schicht während des Prägens mit UV-Licht bestrahlt und dadurch ausgehärtet. Die Vervielfältigung der Originalstruktur kann beispielsweise mit einem Step-und-Repeat-Verfahren erfolgen. Alternativ kann statt der UV-härtbaren Schicht auch ein thermoplastisches Material eingesetzt werden. Anschließend werden die Oberflächenstrukturen durch Bedampfen oder Sputtern ganz oder teilweise verspiegelt oder mit einem Colorshift-System versehen.

Anhand der nachfolgenden Beispiele und ergänzenden Figuren werden die Vorteile der Erfindung und verschiedene bevorzugte Ausführungsformen der Erfindung erläutert. Im Einzelnen zeigen schematisch:
- Fig. 1: die Betrachtung eines erfindungsgemäßen Sicherheitselements unter einem hohen Kippwinkel und hierbei in
- Fig. 2a: in Zentralprojektion und in
- Fig. 2b: in Parallelprojektion;
- Fig. 3: eine Ausführung des erfindungsgemäßen Sicherheitselements als Subwellenlängengitter,
- Fig. 4: ein erfindungsgemäßes Sicherheitselement, das ein EURO-Zeichen zeigt bei
Fig. 4a etwa senkrechter Betrachtung,
Fig. 4b relativ großem Kippwinkel,
Fig. 4c noch größerem Kippwinkel,
- Fig. 5: ein erfindungsgemäßes Sicherheitselement aus geblazten Gittern,
- Fig. 6: ein erfindungsgemäßes Sicherheitselement aus Sägezahstrukturen bzw. Mikrospiegelstrukturen, wobei in
- Fig. 7: zwischen den einzelnen Sägezähnen bzw. Mikrospiegeln Platz freigelassen wird.

Der besseren Verständlichkeit wegen sind die in den folgenden Beispielen beschriebenen Ausführungsformen auf die wesentlichen Kerninformationen reduziert sowie die Darstellungen in den Figuren stark schematisiert und spiegeln nicht die realen Gegebenheiten wider. Vor allem entsprechen die in den Figuren gezeigten Proportionen nicht den in der Realität vorliegenden Verhältnissen und dienen ausschließlich zur Verbesserung der Anschaulichkeit. Bei der praktischen Umsetzung können wesentlich komplexere Muster oder Bilder im Ein- oder Mehrfarbendruck als Beschichtung zur Anwendung kommen. Dasselbe gilt für die Prägestrukturen. Die in den folgenden Beispielen dargestellten Informationen können ebenfalls durch beliebig aufwendige Bild- oder Textinformationen ersetzt werden.

Die Beispiele stellen bevorzugte Ausführungsformen dar, auf die jedoch die Erfindung in keinerlei Weise beschränkt sein soll. Insbesondere sind die verschiedenen Ausführungsbeispiele auch nicht auf die Verwendung in der beschriebenen Form beschränkt, sondern können zur Erhöhung der Effekte auch untereinander kombiniert werden.

Fig. 1 zeigt eine typische Betrachtungssituation. Bei den angestrebten großen Betrachtungswinkeln tritt eine starke perspektivische Verzerrung der in der Banknotenebene dargestellten Bildinformation auf. Beispielsweise erscheinen Bilder bei Betrachtung unter einem Winkel von Θm = 60° in ihrer Länge bereits um den Faktor 2 gestaucht.

Wie das ursprüngliche Bild verzerrt werden muss, damit es bei Betrachtung unter dem vorbestimmten Winkel Θm und Abstand d zwischen Betrachter und Sicherheitsmerkmal in seinen ursprünglichen Proportionen (Rechteck mit dicker Umrandung) erscheint, lässt sich nach den Regeln der Zentralprojektion berechnen, wie in Fig. 2 gezeigt. Wenn der Abstand d ausreichend groß ist, kann die Zentralprojektion gemäß Fig. 2b näherungsweise durch die einfachere Parallelprojektion ersetzt werden.

Die perspektivisch verzerrte Fläche ist grau hinterlegt eingezeichnet.

Die optisch wirksamen Strukturen, aus denen das Bild aufgebaut wird, müssen an die vorbestimmte Betrachtungssituation angepasst werden. Sie sollen einen deutlichen Effekt bei hohen Betrachtungswinkeln hervorrufen, während für Θm < 45° keine oder nur geringe Wirkung sichtbar sein soll. Für diese Aufgabe sind Subwellenlängengitter, geblazte Gitter und Sägezahngitter mit Perioden von über 3 µm besonders gut geeignet. Dies wird in den nachfolgend geschilderten Ausführungsbeispielen näher erläutert.

### Ausführungsbeispiel 1: Realisierung mit Subwellenlängengittern

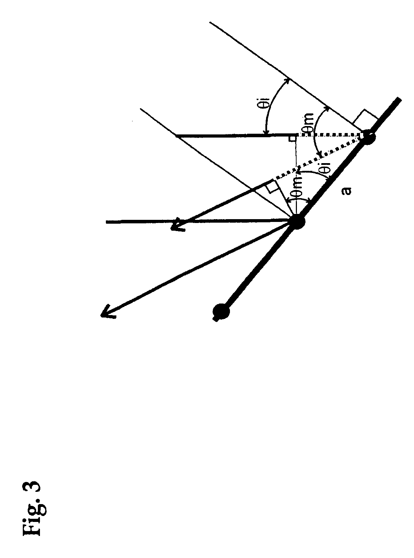

Fig. 3 zeigt ein erfindungsgemäßes Sicherheitsmerkmal in Form eines Subwellenlängengitters mit einer Periode von ca. 300 nm. Subwellenlängengitter sind für Lichteffekte bei hohen Kippwinkeln besonders geeignet.

Die Fig. 3 zeigt zwei einfallende Lichtstrahlen, die unter dem Winkel Θi zur Oberflächennormalen auf das Subwellenlängengitter mit Periode a (durch eine Linie mit schwarzen Punkten dargestellt) treffen und dieses anschließend unter dem Winkel Θm wieder verlassen. Der Gangunterschied Δ der beiden eingezeichneten Lichtwege berechnet sich zu Δ = a (sin Θi + sin Θm). Die übliche Vorzeichen-Konvention ergibt sich aus der Gleichung a (sin Θm - sin Θi) = m λ. Im Allgemeinen tritt konstruktive Interferenz dann auf, wenn der Gangunterschied Δ ein Vielfaches der Lichtwellenlänge beträgt: Δ = m λ. Daraus ergibt sich die Gleichung a (sin Θi + sin Θm) = m λ, die für hohe Winkel Θi, Θm > 45° nur für m=1 lösbar ist (a < λ). Daraus erklärt sich die Leuchtstärke des Subwellenlängengitters: das einfallende Licht wird nur in die erste Beugungsordnung geleitet, höhere Ordnungen existieren nicht und können daher keine Lichtintensität parasitär für sich beanspruchen.

Beispielsweise ergibt sich für a = 300 nm, λ = 560 nm und einen Einfallswinkel Θi von 65° ein Ausfallswinkel von Θm = 74°.

Mit Aluminium bedampfte sinusförmige Gitter mit einer Schichtdicke von mindestens 40 nm, einer Periode von 300 nm und einer Strukturtiefe zwischen 50 nm und 150 nm zeigen bei den berechneten Beleuchtungs- bzw. Betrachtungsverhältnissen ein starkes Aufleuchten in hellgrüner Farbe. Abgesehen von einer Blaufärbung bei etwas geringeren Winkeln erscheinen diese Gitter unter anderen Konstellationen farblos. Die leuchtend grüne Farbe der Subwellenlängengitter verschwindet unter idealen Beleuchtungs- bzw. Betrachtungsbedingungen fast vollständig, wenn ein Polarisator mit entsprechender Orientierung zwischen Muster und Betrachter gebracht wird. Bei Drehung des Polarisators um 90° leuchten die Strukturen wieder auf.

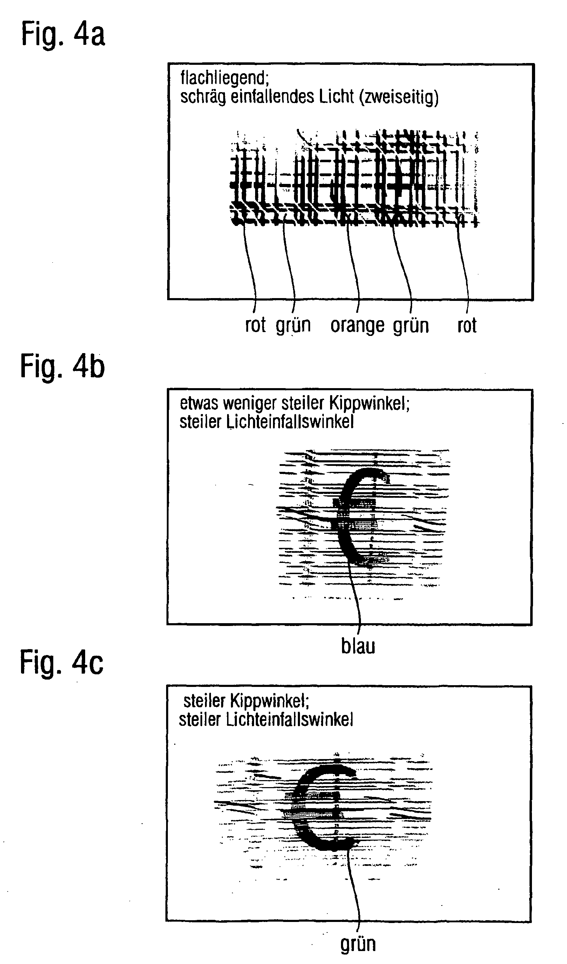

In Fig. 4 ist ein Sicherheitsmerkmal dargestellt, das aus einem EURO-Zeichen besteht. Das EURO-Zeichen ist hierbei den Regeln der Zentralprojektion gemäß so verzerrt, dass es bei Betrachtung unter einem Winkel von Θm = 75° unverzerrt zu lesen ist. Das EURO-Zeichen ist in einen holographischen 3-D-Hintergrund aus senkrecht verlaufenden achromatischen Gitterstäben, kombiniert mit waagrecht angeordneten Linien in achromatischer Ausführung eingebettet, die einen winkelabhängigen Laufeffekt zeigen. Die das EURO-Zeichen bildenden Streifenabschnitte sind mit einem sinusförmigen, 300 nm-Streifengitter gefüllt. Sie bestehen sowohl aus senkrecht verlaufenden Streifen mit einer Breite von 7,7 µm als auch aus waagerecht angeordneten Streifen mit einer Breite von 50 µm. Die in eine UV-härtbare Schicht geprägte Oberflächenstruktur ist mit einer opaken, 40 nm dicken Aluminiumschicht bedampft.

Fig. 4a zeigt das Hologrammdesign bei etwa senkrechter Betrachtung, das EURO-Zeichen ist nicht zu erkennen. Bei relativ großem Kippwinkel, Fig. 4b, taucht das EURO-Zeichen bläulich schimmernd auf, während es bei noch größerem Kippwinkel, Fig. 4c, in grüner Farbe hell aufleuchtet.

Die ideale Betrachtungssituation, bei der das EURO-Zeichen optimal wahrgenommen wird, ist für jedes der beiden Augen eines Betrachters etwas unterschiedlich. Diesen optisch etwas störenden Effekt kann man beseitigen, indem das EURO-Zeichen nicht mit einem homogenen SubwellenlängenGitter gefüllt wird, sondern aus zwei ineinander geschachtelten Subwellenlängen-Gittern mit leicht unterschiedlichen Azimut-Winkeln aufgebaut wird. Dies bietet auch die Voraussetzung für die Integration stereoskopischer Effekte, wie zum Beispiel die Erzeugung einer künstlichen Tiefenanmutung.

Sollen Θi und Θm größer als 45° sein und geht man von einer maximalen Wellenlänge von 700 nm aus, so ergibt sich eine maximale Gitterperiode a von etwa 500 nm (m=1). Allerdings ist zu berücksichtigen, dass blaues Licht (λ = 400 nm) bei demselben Einfallswinkel dann bereits unter Winkeln Θm, die teilweise kleiner sind als 45°, abgestrahlt wird: 63°, 5,3° und -45°. Außerdem würde rotes Licht mit λ = 700 nm auch durch ein Gitter mit a = 1,0 µm unter einem Winkel von 45° praktisch retroreflektiert, allerdings treten auch in diesem Fall weitere Beugungsordnungen auf, die das Gitter unter Winkeln von 0° und -45° verlassen. Es soll jedoch möglichst wenig Licht mit Austrittswinkeln von unter 45° zu erzeugt werden, nicht zuletzt um die Brillanz bei großen Kippwinkeln zu verstärken. Deshalb sollte die Gitterperiode a kleiner als 500 nm, bevorzugt kleiner als 400 nm und besonders bevorzugt zwischen 300 und 250 nm sein.

Die hohe Leuchtkraft des Ausführungsbeispiels aus Fig. 4 ermöglicht es, die Gitterstruktur der Bildinformation mithilfe sehr schmaler Linien mit einer Breite zwischen 5 und 100 µm, besonders bevorzugt aber zwischen 10 und 60 µm, darzustellen. Neben ihrer geringen Breite entwickeln diese Linien unter Betrachtungsbedingungen, wie sie üblicherweise bei Standardhologrammen eingesetzt werden, keinerlei Farbigkeit. Aufgrund dieser beiden Eigenschaften können die beschriebenen Subwellenlängengitter sehr gut in einem Standardhologramm versteckt werden, ohne dessen Leuchtkraft merklich zu verringern. Das Subwellenlängengitter entfaltet seine Wirkung erst unter der in Beispiel 1 dargelegten Konstellation, in der es in hellgrüner Farbe markant aufleuchtet und die Bildinformation erkennbar wird. Das Standardhologramm ist bei den hohen Kippwinkeln weitgehend farblos und stört die durch das Subwellenlängengitter dargestellte Bildinformation praktisch nicht.

Ein weiterer Vorteil des zusätzlich in ein Standardhologramm integrierten Subwellenlängengitters besteht darin, dass das Sicherheitselement dadurch fälschungssicherer wird. Subwellenlängengitter sind vor allem mit der Methode der interferometrischen Direktbelichtung schwer zu fälschen. Insbesondere werden dafür tendenziell Laser mit Wellenlängen maximal im grünen Spektralbereich benötigt, was wiederum höhere Anforderungen an den apparativen Aufwand des Fälschers stellt. Eine weitere Hürde liegt darin, die sehr feinen Linien mit einer Breite von wenigen 10 µm mittels Direktbelichtung exakt in ein Hologrammdesign einzupassen.

### Ausführungsbeispiel 2: Realisierung mit geblazten Gittern

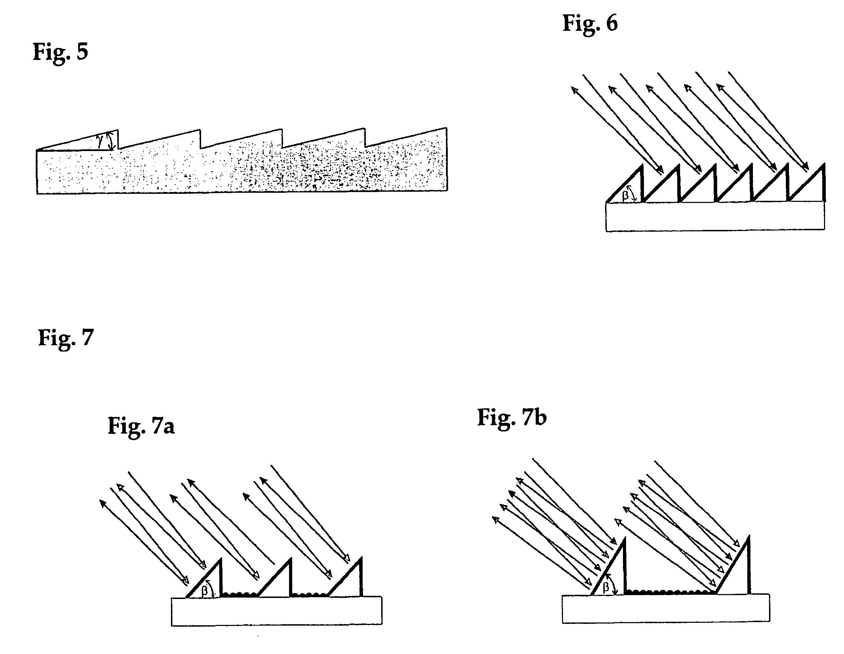

Wenngleich herstellungstechnisch anspruchsvoller, können gemäß Fig. 5 auch geblazte Gitter eingesetzt werden, um brillante Farbeffekte bei den geforderten hohen Kippwinkeln zu realisieren. Diese geblazten Gitter weisen bevorzugt Perioden auf, die vom Subwellenlängenbereich bis zu einigen Mikrometern reichen. Durch asymmetrische Gestaltung der Gitterlinien, insbesondere durch Abstimmen des Winkels y auf die Gitterperiode, lässt sich die gewünschte Beugungsordnung auf Kosten der anderen Ordnungen verstärken. Anstelle einer symmetrischen Intensitätsverteilung auf die verschiedenen Beugungsordnungen, die für symmetrische, beispielsweise sinusförmige Gitter typisch ist, tritt bei asymmetrischen Gittern, wie dem nachfolgend skizzierten geblazten Gitter, eine asymmetrische Verteilung der Lichtintensität auf die Beugungsordnungen auf. Dies bedeutet, dass selbst bei Gittern, die auch höhere Beugungsordnungen (als m=1) erzeugen, die Lichtintensität des gebeugten Lichts auf eine bestimmte Beugungsordnung konzentriert werden kann. Diese Beugungsordnung, die je nach Design bei einem hohen Kippwinkel liegen kann, erscheint dann besonders hell, während die anderen Beugungsordnungen, die beispielsweise bei niedrigeren Kippwinkeln liegen, lichtschwach sind und folglich kaum auffallen.

### Ausführungsbeispiel 3: Realisierung mit steilen Sägezahnstrukturen

Hohe Ablenkwinkel lassen sich gemäß Fig. 6 auch durch Sägezahnstrukturen bzw. Mikrospiegelstrukturen, wie sie in DE 10 2005 061 749 beschrieben wurden, mit steilen Anstellwinkeln β (β > 30°, besonders bevorzugt β > 45°) erzielen. Diese Strukturen unterscheiden sich von den oben beschriebenen geblazten Gittern darin, dass sie eine größere Gitterperiode bzw. laterale Ausdehnung der Einzelelemente aufweisen (mindestens 3 µm, bevorzugt 5 µm, besonders bevorzugt zwischen 5 und 15 µm). Die Strukturen wirken daher achromatisch, da Beugung im Vergleich zur spiegelnden Reflexion ("Einfallswinkel gleich Ausfallswinkel") eine untergeordnete Rolle spielt. Folglich lässt sich der Ausfallswinkel Θm aus dem Einfallswinkel Θi und dem Anstellwinkel β mithilfe elementargeometrischer Überlegungen ermitteln.

Da sich die Sägezähne bzw. Mikrospiegel bei den angestrebten hohen Einfalls- bzw. Ausfallswinkeln, die hohe Anstellwinkel β bedingen, gegenseitig abschatten, kann gemäß Fig. 7 zwischen den einzelnen Sägezähnen bzw. Mikrospiegeln auch Platz freigelassen werden, der idealerweise mit anderen Strukturen, z.B. holographischen Gitterstrukturen, gefüllt wird. Auf diese Weise lassen sich die für hohe Kippwinkel vorgesehenen Sicherheitsmerkmale auf Basis von Sägezähnen und Mikrospiegeln gut in den Standardhologrammen verbergen. Die Hologrammstrukturen sind von oben noch gut einsehbar und können ihre Wirkung von den Mikrostrukturen ungehindert entfalten.

Diese Methode bietet den zusätzlichen Vorteil, dass aufgrund der großen Abstände zwischen den Spiegeln Beugungserscheinungen eine noch geringere Rolle spielen als ohnehin schon.

Wie in DE 10 2005 061 749 beschrieben, kann die Reflektivität der Spiegel durch bestimmte Maßnahmen gezielt beeinflusst werden, um die Intensität des unter hohen Kippwinkeln gemäß Fig. 1 abgelenkten Lichts zu steuern. Soll das Sicherheitsmerkmal im Durchsichtsfenster einer Banknote mit Loch eingesetzt werden, so wird besonders bevorzugt eine Kombination mit einem Jalousieeffekt gemäß DE 10 2006 050 047 verwendet. Beispielsweise können die um den Winkel β geneigten Sägezahnflanken durch Schrägbedampfen verspiegelt werden, ohne dass Metall auf die der Dampfquelle abgewandten senkrechten Sägezahnflanken oder die nicht mit Sägezähnen bedeckten Zwischenbereiche gelangt (Abschattung). Auf diese Weise erreicht man, dass das Sicherheitsmerkmal bei starkem Verkippen zu einer Seite die in Fig. 1 gezeigte Situation gewährleistet, während es von oben betrachtet oder bei Verkippen zur anderen Seite transparent erscheint.

Besonders schöne Farbeffekte ergeben sich weiterhin, wenn nicht nur eine einzelne reflektierende oder zumindest teilweise reflektierende Metallschicht aufgetragen wird, sondern ein sogenanntes Colorshift-Schichtsystem. Solche Systeme setzen sich typischerweise aus einer Spiegelschicht, wie einer Metallschicht, und einem semitransparenten Absorber zusammen, zwischen denen eine dielektrische Schicht eingebettet ist.

### Ausführungsbeispiel 4: Kombination von Subwellenlängengittern, geblazten Gittern und Sägezahnstrukturen

Die in den Ausführungsbeispielen 1 bis 3 erläuterten Strukturen Subwellenlängengitter, geblazte Gitter und Sägezahnstrukturen bzw. Mikrospiegel können auch miteinander kombiniert werden. Während die Beugungsgitter eine starke Farbwirkung hervorrufen, bestechen die Sägezahnstrukturen durch ihre achromatische Helligkeit. Durch die Kombination solcher Strukturen kann man diese unterschiedlichen optischen Wirkungen nutzen, um besonders ansprechende Designs für hohe Kippwinkel zu entwerfen. Darüber hinaus erhöht die Kombination von Strukturen im Subwellenlängen bereich mit Mikrostrukturen die Fälschungssicherheit erheblich, da zu diesem Zweck unterschiedliche Herstellungstechnologien verfügbar sein und in Einklang gebracht werden müssen.

## Patentansprüche

1. Sicherheitselement für Wertdokumente, wie Banknoten oder Ausweiskarten, mit einem ersten Sicherheitsmerkmal, wobei in mindestens einem Bereich des ersten Sicherheitsmerkmals ein zweites Sicherheitsmerkmal angeordnet ist, das mindestens aus einem Subwellenlängengitter, einem geblazten Gitter oder einem Sägezahngitter besteht **dadurch gekennzeichnet, dass** das zweite Sicherheitsmerkmal aus mindestens einem perspektivisch verzerrten Bild besteht, das bei Betrachtung unter einem Betrachtungswinkel verzerrungsfrei in den korrekten Proportionen erscheint, bei dem ein Betrachter das Subwellenlängengitter, geblazte Gitter oder Sägezahngitter leuchtend bzw. hell wahrnimmt, und bei einem anderen Betrachtungswinkel nicht oder gegenüber dem ersten Sicherheitsmerkmal kaum in Erscheinung tritt, wobei der Betrachtungswinkel, bei dem ein Betrachter das Subwellenlängengitter, das geblazte Gitter oder das Sägezahngitter leuchtend bzw. hell wahrnimmt, mindestens 45° zur Oberflächennormalen des Sicherheitselements beträgt.

2. Sicherheitselement nach Anspruch 1, **dadurch gekennzeichnet, dass** das erste Sicherheitsmerkmal eine diffraktive Struktur, insbesondere ein Hologramm ist.

3. Sicherheitselement nach einem der vorigen Ansprüche, **dadurch gekennzeichnet, dass** das zweite Sicherheitsmerkmal ein Subwellenlängengitter enthält, das eine Periode von ca. 300 nm aufweist.

4. Sicherheitselement nach einem der vorigen Ansprüche, **dadurch gekennzeichnet, dass** das zweite Sicherheitsmerkmal ein geblaztes Gitter enthält, das eine Periode vom Subwellenlängenbereich bis zu 3 µm aufweist.

5. Sicherheitselement nach einem der vorigen Ansprüche, **dadurch gekennzeichnet, dass** das zweite Sicherheitsmerkmal ein Sägezahngitter enthält, das eine Periode von über 3 µm, bevorzugt 5 µm und besonders bevorzugt von 5 µm bis 15 µm aufweist.

6. Sicherheitselement nach einem der vorigen Ansprüche, **dadurch gekennzeichnet, dass** das zweite Sicherheitsmerkmal aus einer beliebigen Kombination von Subwellenlängengitter, geblaztem Gitter und Sägezahngitter besteht.

7. Sicherheitselement nach einem der vorigen Ansprüche, **dadurch gekennzeichnet, dass** das Sicherheitselement ein Sicherheitsfaden, ein Fensterfaden, ein Sicherheitsetikett oder eine Sicherheitsfolie ist.

8. Sicherheitselement nach einem der vorigen Ansprüche, **dadurch gekennzeichnet, dass** das Sicherheitselement weitere dritte Sicherheitsmerkmale aufweist.

9. Sicherheitselement nach Anspruch 8, **dadurch gekennzeichnet, dass** die weiteren dritten Sicherheitsmerkmale magnetische, phosphoreszierende, fluoreszierende oder sonstige lumineszierende Stoffe, gezielt eingestellte Leitfähigkeit, Farbkippeffekte oder gefärbte Prägelacke sind.

## Claims

1. A security element for value documents, such as banknotes or identification cards, having a first security feature, wherein a second security feature that consists at least of a subwavelength grating, a blazed grating or a sawtooth grating is arranged in at least one region of the first security feature, **characterized in that** the second security feature consists of at least one perspective-distorted image that appears distortion-free in the correct proportions, when viewed at a certain viewing angle, at which a viewer perceives the subwavelength grating, blazed grating or sawtooth grating to be shiny or bright, and that is not noticeable or, compared with the first security feature, is hardly noticeable, at another viewing angle, wherein the certain viewing angle at which a viewer perceives the subwavelength grating, the blazed grating or the sawtooth grating to be shiny or bright is at least 45° to the surface normal of the security element.

2. The security element according to claim 1, **characterized in that** the first security feature is a diffractive pattern, especially a hologram.

3. The security element according to one of the preceding claims, **characterized in that** the second security feature includes a subwavelength grating that has a period of about 300 nm.

4. The security element according to one of the preceding claims, **characterized in that** the second security feature includes a blazed grating that has a period from the subwavelength range up to 3 µm.

5. The security element according to one of the preceding claims, **characterized in that** the second security feature includes a sawtooth grating that has a period of more than 3 µm, preferably 5 µm and particularly preferably from 5 µm to 15 µm.

6. The security element according to one of the preceding claims, **characterized in that** the second security feature consists of an arbitrary combination of subwavelength grating, blazed grating and sawtooth grating.

7. The security element according to one of the preceding claims, **characterized in that** the security element is a security thread, a window thread, a security label or a security foil.

8. The security element according to one of the previous claims, **characterized in that** the security element comprises further third security features.

9. The security element according to claim 8, **characterized in that** the further third security features are magnetic, phosphorescent, fluorescent or other luminescent substances, selectively adjusted conductivity, color-shift effects or colored embossing lacquers.

## Revendications

1. Elément de sécurité pour des documents de valeur, tels des billets de banque ou des cartes d'identité, avec un premier signe de sécurité, dans lequel, dans au moins une zone du premier signe de sécurité est disposé un second signe de sécurité qui se compose au moins d'un réseau sub-longueur d'onde, d'un réseau blazé ou d'un réseau en dents de scie, **caractérisé en ce que** le second signe de sécurité se compose d'au moins une image déformée en perspective laquelle, lorsque observée selon un angle d'observation, apparaît sans déformation dans les proportions correctes, un observateur discernant le réseau sub-longueur d'onde, le réseau blazé ou le réseau en dents de scie de manière lumineuse ou claire, et celui-ci n'apparaissant pas, ou apparaissant à peine par rapport au premier signe de sécurité avec un autre angle d'observation différent, l'angle d'observation avec lequel un observateur discerne le réseau sub-longueur d'onde, le réseau blazé ou le réseau en dents de scie de manière lumineuse ou claire étant au moins de 45° par rapport à la normale à la surface de l'élément de sécurité.

2. Elément de sécurité selon la revendication 1, **caractérisé en ce que** le premier signe de sécurité est une structure à diffraction, en particulier un hologramme.

3. Elément de sécurité selon l'une des revendications précédentes, **caractérisé en ce que** le second signe de sécurité contient un réseau sub-longueur d'onde qui présente une période d'environ 300 nm.

4. Elément de sécurité selon l'une des revendications précédentes, **caractérisé en ce que** le second signe de sécurité contient un réseau blazé qui présente une période de la plage de sub-longueur d'onde jusqu'à 3 µm.

5. Elément de sécurité selon l'une des revendications précédentes, **caractérisé en ce que** le second signe de sécurité contient un réseau en dents de scie qui présente une période de plus de 3 µm, de préférence de 5 µm, et de manière particulièrement préférée, de 5 µm à 15 µm.

6. Elément de sécurité selon l'une des revendications précédentes, **caractérisé en ce que** le second signe de sécurité se compose d'une combinaison au choix d'un réseau sub-longueur d'onde, d'un réseau blazé et d'un réseau en dents de scie.

7. Elément de sécurité selon l'une des revendications précédentes, **caractérisé en ce que** l'élément de sécurité est un fil de sécurité, un fil de fenêtre, une étiquette de sécurité ou une feuille de sécurité.

8. Elément de sécurité selon l'une des revendications précédentes, **caractérisé en ce que** l'élément de sécurité présente d'autres troisièmes signes de sécurité.

9. Elément de sécurité selon la revendication 8, **caractérisé en ce que** les autres troisièmes signes de sécurité sont des substances magnétiques, phosphorescentes, fluorescentes ou d'autres substances luminescentes, une conductivité réglée de manière ciblée, des effets de changement de couleur ou des vernis d'estampage colorés.
